# EUROPÄISCHE PATENTSCHRIFT

(11) **EP 0 692 858 B1**
(45) Veröffentlichungstag und Bekanntmachung des Hinweises auf die Patenterteilung: **29.07.1998**
(21) Anmeldenummer: 95106035.9
(22) Anmeldetag: 22.04.1995
(51) Int. Cl.: H02J 3/38, G07C 3/00, H02P 13/06

(54) **Verfahren zur Darstellung der Anlagenkonfiguration von beliebig auf mehreren Sammelschienen parallelgeschalteten Stufentransformatoren an einem Spannungsregler und Monitorfeld zur Darstellung**
Method for displaying a power plant configuration of any of more power busbars parallel connected step transformators with a tension regulator and a display array for the display
Méthode pour représenter la configuration d'installations de transformateurs à gradins connectés en parallèle sur un nombre quelconque de barres omnibus, avec régulateur de tension et zone de moniteur pour la représentation

(30) Priorität: 14.07.1994 DE 4424886
(43) Veröffentlichungstag der Anmeldung: 17.01.1996
(73) Patentinhaber: MASCHINENFABRIK REINHAUSEN GmbH, 93059 Regensburg (DE)
(72) Erfinder: Okanik, Peter, Dipl. Ing. (TU), D-93128 Regenstauf (DE); Kugler, Kurt, Dipl. Ing. (FH), D-93138 Hainsacker (DE)

(56) Entgegenhaltungen:
- WO-A-93/17480
- DD-A- 236 211
- US-A- 5 210 443
- MASCHINENFABRIK REINHAUSEN, Elektronischer Spannungsregler MK 30E, BA 121-02/94de - 0594/500

## Beschreibung

Die Erfindung betrifft ein Verfahren zur Darstellung der Anlagenkonfiguration gemäß dem ersten Patentanspruch. Die Erfindung betrifft weiterhin ein dafür geeignetes Monitorfeld.

Ein solches Verfahren ist aus der Betriebsanweisung "Elektronischer Spannungsregler MK30E", Impressum BA 121-02/94de-0594/500, der Anmelderin bekannt.
Bei diesem bekannten Verfahren wird ein Monitorfeld vorgesehen, das eine graphische Darstellung einer möglichen Maximalkonfiguration von sechs Stufentransformatoren, die auf zwei Sammelschienen geschaltet sind, enthält.
In dieser Darstellung ist vorgesehen, daß jeder der Stufentransformatoren mit je einem Leistungsschalter mit jeder der Sammelschienen verbindbar ist, daß jede der Sammelschienen durch jeweils einen weiteren Leistungsschalter in der Mitte auftrennbar ist und daß die beiden Sammelschienen durch weitere Leistungsschalter miteinander verbindbar sind. Der Schaltzustand jedes Leistungsschalters wird durch eine LED optisch angezeigt.
Die Abfrage des Schaltzustandes des jeweiligen Leistungsschalters erfolgt durch Meldekontakte, die mittels eines Optokopplers potentialgetrennt angeschlossen werden, so daß dem Monitorfeld der Schaltzustand aller Leistungsschalter entnehmbar ist.

Dieses Verfahren hat mehrere Nachteile.
Zum einen geht es von einem einheitlichen Monitorfeld aus, das, wie oben erläutert, die mögliche Maximalkonfiguration darstellt. Diese Maximalkonfiguration ist jedoch in den meisten Fällen praktisch ausgeführter Parallellaufanordnungen gar nicht gegeben; insbesondere sind häufig nicht alle parallelen Stufentransformatoren mit jeweils beiden Sammelschienen beliebig verbindbar, d.h. entsprechende Leistungsschalter sind nicht vorgesehen. Oft entfallen auch bestimmte Längs- oder Quertrenner, d.h. - Leistungsschalter in oder zwischen den einzelnen Sammelschienen. Es ist also in vielen Fällen von vornherein eine Nichtbelegung vorhandener Anzeigeelemente festzustellen, wodurch die Erkennung der tatsächlich aktuell geschalteten Konfiguration erschwert wird.

Abhilfe könnte hier nur ein jeweils den konkreten Bedingungen der Anlage angepaßtes Monitorfeld schaffen, was aufwendig wäre und eine Kompatibilität gelieferter Geräte zur Parallellaufregelung für unterschiedliche Konfigurationen praktisch ausschließen würde. Weiterhin ergeben sich aus den zahlreichen möglichen Stellungen der Leistungsschalter bzw. Trenner nach den Regeln der Kombinatorik zahlreiche Betriebszustände bei der Parallellaufregelung, von denen einige jeweils praktisch die gleiche Konfiguration bedeuten.
Schließlich ist aufgrund der zahlreichen Anzeigeelemente für die Stellung der Leistungsschalter ein schneller Überblick über die tatsächlich geschaltete Konfiguration nicht möglich; es müssen erst die jeweils geschalteten Leitungswege verfolgt werden.

Aufgabe der Erfindung ist es, diese Nachteile zu vermeiden und ein Verfahren zur Darstellung der Anlagenkonfiguration anzugeben, das die Verwendung eines einzigen Monitorfeldes für unterschiedlichste Konfigurationen gestattet und durch das dennoch die jeweilige konkrete aktuelle Konfiguration auf einfachste Weise auf einem geeigneten Monitorfeld darstellbar ist.

Diese Aufgabe wird durch ein Verfahren mit den Merkmalen des ersten Patentanspruches gelöst. Der Anspruch 2 betrifft ein besonders vorteilhaftes Monitorfeld für dieses Verfahren.

Die Erfindung soll nachstehend anhand von Figuren beispielhaft noch näher erläutert werden.
- Fig. 1: zeigt in schematischer Darstellung den Ablauf des erfindungsgemäßen Verfahrens
- Fig. 2: zeigt ein bei der Durchführung dieses Verfahrens besonders vorteilhaft anwendbares Monitorfeld.

Das erfindungsgemäße Verfahren setzt eine Anlagenkonfiguration voraus, bei der ein einziges Parallelsteuergerät vorhanden ist, das auf die jedem Stufenschalter zugeordneten Spannungsregler wirkt; das gesamte Verfahren läuft in diesem einzigen Parallelsteuergerät ab.
Das erfindungsgemäße Verfahren gliedert sich in zwei nacheinander ablaufende prinzipielle Teile.

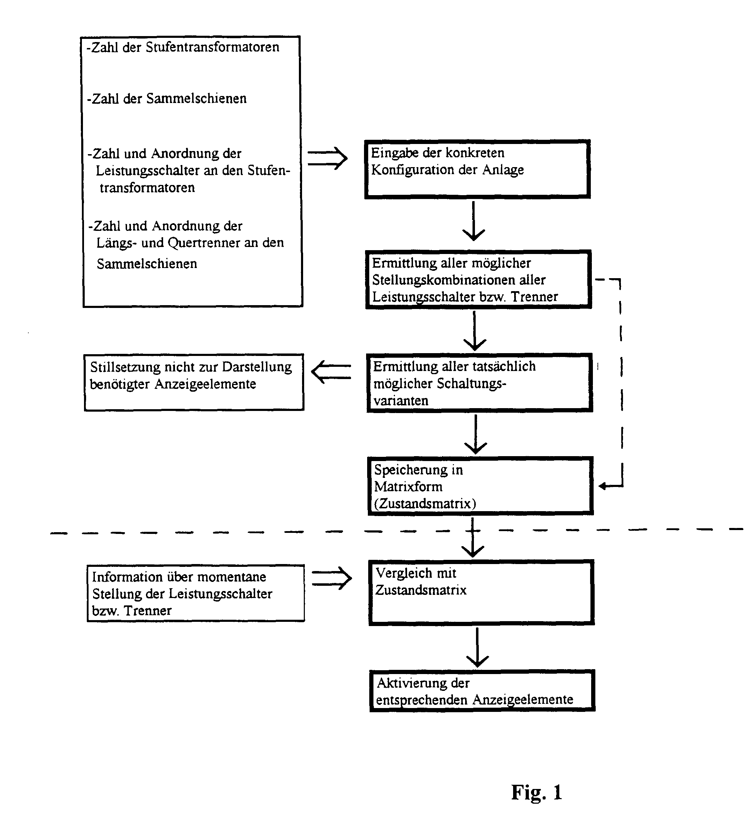

Der erste Teil - in Fig. 1 oberhalb der waagerechten Strichlinie - des Verfahrens läuft einmalig zur Anpassung des Parallelsteuergerätes an die Anlagenkonfiguration ab. Hierzu werden einem nichtflüchtigen Speicher die Angaben zur konkreten Konfiguration, nämlich die Zahl der Stufentransformatoren, die Zahl der Sammelschienen, Zahl und Anordnung der Leistungsschalter an den Stufentransformatoren und Zahl und Anordnung der Längs- und Quertrenner an den Sammelschienen, eingegeben. Das Parallelsteuergerät besitzt einen Mikroprozessor, der aus den Angaben alle kombinatorisch möglichen Stellungskombinationen der vorhandenen Leistungsschalter und Trenner berechnet und in einem weiteren Verfahrensschritt daraus alle möglichen Schaltungsvarianten, d.h. Strompfade ermittelt. Den möglichen Strompfaden werden die entsprechenden Anzeigeelemente, die diese symbolisieren zugeordnet. Nicht benötigte Anzeigeelemente werden deaktiviert.
Im nächsten Verfahrensschritt wird eine Konkordanz zwischen den kombinatorisch möglichen Stellungskombinationen der Leistungsschalter und Längs- und Quertrenner einerseits und den daraus resultierenden Strompfaden andererseits hergestellt. Diese Zustandsmatrix wird nichtflüchtig gespeichert.
Damit ist der erste Teil des Verfahrens abgeschlossen; das Parallelsteuergerät ist an die jeweilige konkrete Anlagenkonfiguration angepaßt.

Der zweite Teil des Verfahrens läuft während des Betriebes, d.h. während der eigentlichen Parallellaufregelung, ab.
Dem Parallelsteuerteil der Spannungsregelung werden Informationen über die aktuelle Stellung der Leistungsschalter und Trenner gegeben. Dies kann durch Meldekontakte erfolgen, wie aus der o.a. Betriebsanweisung bekannt. Die Konfiguration kann auch elektronisch durch Spannungsvergleich ermittelt werden, wie aus der DEC 40 04 671 bekannt. Dabei wird von der Überlegung ausgegangen, daß bei Transformatoren, die an gleiche Sammelschienen geschaltet sind, die gleiche Spannung an ihnen gemessen wird.

Diese Konfiguration wird nachfolgend mit der nichtflüchtig gespeicherten Matrix verglichen; das Parallelsteuergerät aktiviert die für die Darstellung des jeweiligen Strompfades erforderlichen Anzeigeelemente. Es werden also nur die jeweiligen Strompfade dargestellt, nicht aber die Stellungen der einzelnen Leistungsschalter bzw. Trenner.

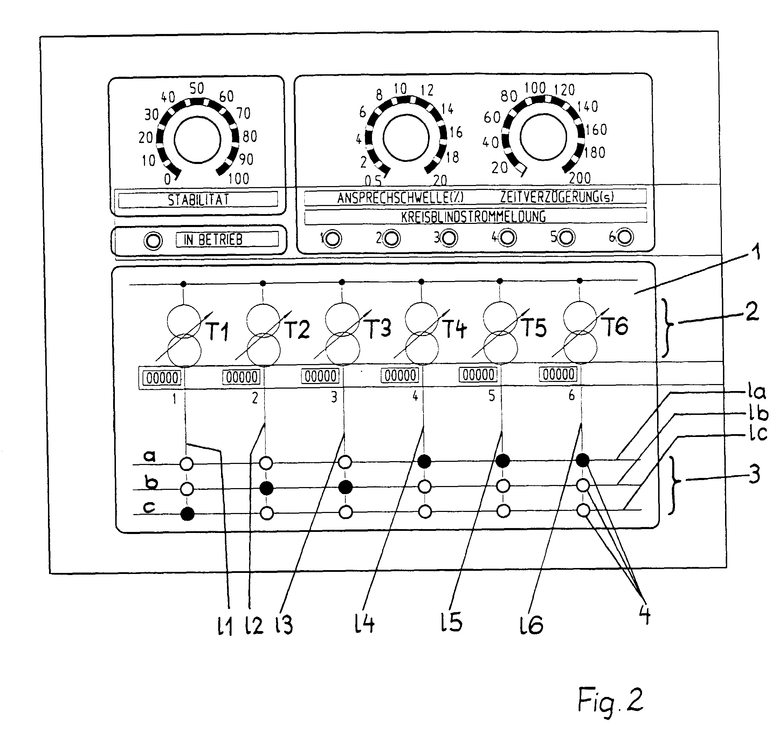

Fig. 2 zeigt ein dafür besonders geeignetes erfindungsgemäßes Monitorfeld als Bestandteil eines Anzeige- und Bedienteils.

Bei der weiteren Beschreibung wird nur auf dieses Monitorfeld eingegangen; die an sich bekannten übrigen Bedien- bzw. Einstellelemente, die in der Figur der Vollständigkeit halber mit dargestellt sind, bleiben unberücksichtigt.
Auf diesem Monitorfeld 1 sind die möglichen Konfigurationen von Stufentransformatoren 2, hier sechs Stufentransformatoren T1-T6, auf aufmehreren Sammelschienen 3, hier drei Sammelschienen a, b, c, dargestellt.
Dies geschieht dadurch, daß jeder Sammelschiene a, b, c jeweils eine erste Linie la, lb, lc zugeordnet ist und jedem der Stufentransformatoren T1...T6 eine weitere Linie l1...l6 zugeordnet ist, derart, daß sich jede der weiteren Linien l1...l6 mit jeder der ersten Linien la, lb, lc kreuzt und an den sich ergebenden Schnittstellen 4 optisch aktivierbare Anzeigeelemente vorgesehen sind, mittels der die möglichen Strompfade symbolisierbar sind.
Allgemein ergeben sich demnach bei n Sammelschienen und m Stufentransformatoren (n x m) solcher Schnittstellen 4.

Die optische Aktivierung erfolgt vorzugsweise durch Leuchtdioden, die im Bereich der Schnittstellen 4 angeordnet sind bzw. diese selbst bilden. Leistungsschalter, Längs- oder Quertrenner sind dagegen nicht dargestellt und ihre Stellung ist damit auch optisch nicht anzeigbar.

Durch die Erfindung wird erreicht, daß direkt diejenigen Anzeigeelemente - und nur diese - aktiviert werden, die den jeweiligen Strompfad symbolisieren, ohne Rücksicht darauf, durch welche Schaltkombination von Leistungsschaltern und Trennern dieser Strompfad tatsächlich erreicht wird. Sind beispielsweise T1 auf Sammelschiene c, T2 und T3 auf Sammelschiene b und T4 bis T6 auf Sammelschiene a geschaltet, so ergibt sich die in der Figur dargestellte Anzeige, wobei leuchtende Anzeigeelemente, hier LED, schwarz markiert sind.
Es ist ersichtlich, daß dieses Monitorfeld, dem das erfindungsgemäße Verfahren zugrundeliegt, einen schnellen Überblick über die tatsächliche momentane Beschaltung, d.h. Konfiguration gibt, ohne daß - wie nach dem Stand der Technik üblich - auf Monitorfeldern die Schaltzustände der einzelnen Leistungsschalter und Trenner angezeigt wird, aus denen durch den Bedienenden, quasi als Sekundärinformation, erst die Konfiguration ermittelt werden müßte.

## Patentansprüche

1. Verfahren zur Darstellung der Anlagenkonfiguration von beliebig auf mehreren Sammelschienen parallelgeschalteten Stufentransformatoren mit Spannungsregler mit folgenden Verfahrensschritten:
- in einem nichtflüchtigen Speicher werden die Angaben zur konkreten Konfiguration, nämlich die Zahl der Stufentransformatoren, die Zahl der Sammelschienen, die Zahl und Anordnung der Leistungsschalter an den Stufentransformatoren und die Zahl und Anordnung der Längs- und Quertrenner an den Sammelschienen, gespeichert
- ein Mikroprozessor berechnet anschließend aus diesen Angaben alle kombinatorisch möglichen Stellungskombinationen der vorhandenen Leistungsschalter und Längs- und Quertrenner
- anschließend werden daraus alle möglichen Schaltungsvarianten, d.h. Strompfade, ermittelt und entsprechenden Anzeigeelementen, die diese Strompfade symbolisieren, zugeordnet
- anschließend wird eine Konkordanz zwischen den kombinatorisch möglichen Stellungskombinationen der Leistungsschalter und Längs- und Quertrenner einerseits und den daraus resultierenden Strompfaden und den entsprechenden Anzeigeelementen andererseits hergestellt und, vorzugsweise als Zustandsmatrix, nichtflüchtig gespeichert
- die jeweiligen, durch Meldekontakte oder auf elektronischem Wege ermittelten, Informationen über die aktuelle Stellung der Leistungsschalter und Längs- und Quertrenner werden mit der nichtflüchtig gespeicherten Konkordanz verglichen; daraus wird der jeweilige Strompfad ermittelt
- anschließend werden die für die Darstellung des derart ermittelten Strompfades benötigten Anzeigeelemente aktiviert.

2. Monitorfeld für das Verfahren nach Anspruch 1 zur Darstellung der Anlagenkonfiguration von beliebig auf mehreren Sammelschienen parallelgeschalteten Stufentransformatoren mit Spannungsregler, wobei die einzelnen Sammelschienen als parallel verlaufende erste Linien dargestellt sind, wobei weiterhin die einzelnen Stufentransformatoren jeweils als Schaltungssymbol dargestellt sind, von denen weg sich - die elektrische Verbindung symbolisierende - weitere Linien erstrecken,
dadurch gekennzeichnet,
daß von jedem Symbol (2) eines Stufentransformators (T1...T6) jeweils nur eine einzige weitere Linie (l1...l6) wegführt, die jeweils alle die Sammelschienen (3) symbolisierenden ersten Linien (la, lb, lc) kreuzt,
wobei alle weiteren Linien (l1...l6) parallel zueinander verlaufen
und wobei in jedem oder nahe der sich bei n Sammelschienen (3) und m Stufentransformatoren (2) ergebenden n x m Kreuzungspunkte, d.h. Schnittstellen (4) der ersten Linien (la, lb, lc) mit den weiteren Linien (l1...l6), jeweils ein aktivierbares optisches Anzeigeelement, vorzugsweise eine Leuchtdiode, angeordnet ist.

## Claims

1. Method of representing the installation configuration of tapped transformers, which are connected in parallel in any desired manner to several busbars, with voltage regulators, with the following method steps:
- the specifications for the actual configuration, namely number of tapped transformers, number of busbars, number and arrangement of circuitbreakers at the tapped transformers and number and arrangement of longitudinal and transverse isolators at the busbars, are stored in a non-volatile storage device,
- a microprocessor then computes from these specifications all combinatorially possible setting combinations of the circuitbreakers and longitudinal and transverse isolators that are present,
- then all possible circuit variants, i.e. current paths, are determined therefrom and associated with corresponding indicator elements symbolising these current paths,
- then a concordance between the combinatorially possible setting combinations of the circuitbreakers and longitudinal and transverse isolators on the one hand and the current paths resulting therefrom and the corresponding indicator elements on the other hand is produced and stored in non-volatile manner, preferably as a state matrix,
- the respective data, which are ascertained by signal contacts or on electronic routes, about the actual setting of the circuitbreakers and longitudinal and transverse isolators are compared with the concordance stored in non-volatile manner; the respective current path is determined therefrom
- then the indicator elements required for representation of the current path determined in that manner are activated.

2. Monitoring field for the method according to claim 1, for representing the installation configuration of taped transformers, which are connected in parallel in any desired manner to several busbars, with voltage regulators, wherein the individual busbars are represented as parallelly extending first lines, wherein moreover the individual tapped transformers are represented each time as circuit symbols, away from which extend further lines symbolising the electrical connection, characterised thereby that each time only one single further line (11...16), which each time crosses all the first lines (1a, 1b, 1c) symbolising the busbars (3), goes off from each symbol (2) of a tapped transformer (T1...T6), wherein all further lines (11...16) extend parallelly to one another and wherein a respective activatable optical indicator element, preferably a luminescent diode, is arranged in or near each of the n x m crossing points resulting for n busbars (3) and m tapped transformers (2), i.e. intersections (4) of the first lines (1a, 1b, 1c) with the further lines (11...16).

## Revendications

1. Procédé de représentation de la configuration d'une installation se composant de transformateurs à gradins connectés en parallèle à plusieurs barres omnibus, avec régulateur de tension, procédé comprenant les séquences suivantes :
- on met dans une mémoire non volatile les indications correspondant à la configuration concrète, à savoir le nombre des transformateurs à gradins, le nombre des barres omnibus, le nombre et la disposition des sectionneurs de puissance sur les transformateurs à gradins et le nombre et la disposition des séparateurs longitudinaux et transversaux sur les barres omnibus,
- un microprocesseur calcule ensuite à partir de ces données toutes les combinaisons possibles de position des sectionneurs de puissance et des séparateurs longitudinaux et transversaux,
- ensuite on détermine à partir de là toutes les variantes de montage possibles, c'est-à-dire les trajets suivis par le courant, et on les associe à des éléments correspondants d'indication, qui symbolisent ces trajets suivis par le courant,
- ensuite on établit une concordance entre les combinaisons possibles de positions des sectionneurs de puissance et des séparateurs longitudinaux et transversaux d'une part et les trajets pour le courant, qui en résultent et les éléments d'indication correspondants d'autre part, et on la met dans une mémoire non volatile, de préférence sous la forme d'une matrice d'état,
- les informations respectives, détectées par des contacts témoins ou par voie électronique, sur la position actuelle des sectionneurs de puissance et des séparateurs longitudinaux et transversaux sont comparées avec la concordance mise dans une mémoire non volatile ; on détermine à partir de là le trajet du courant correspondant - ensuite on active les éléments indicateurs nécessaires à la représentation du trajet suivi par le courant, déterminé de cette manière.

2. Champ d'écran de contrôle pour le procédé selon la revendication 1 servant à la représentation de la configuration d'une installation se composant de transformateurs à gradins, montés à volonté en parallèle à plusieurs barres omnibus, avec régulateur de tension, dans lequel les différentes barres omnibus sont représentées sous la forme de premières lignes s'étendant parallèlement les unes aux autres, les différents transformateurs à gradins étant représentés respectivement sous la forme de symboles de circuits, d'où partent d'autres lignes - symbolisant la liaison électrique,
caractérisé en ce que
de chaque symbole (2) d'un transformateur à gradins (T1...T6) part respectivement une seule autre ligne (11...16), qui croise respectivement toutes les premières lignes (1a, 1b, 1c), qui symbolisent les barres omnibus (3), toutes les autres lignes (11...16) s'étendant parallèlement les unes aux autres, et un élément d'indication, visuel, de préférence une diode luminescente, qui peut être activé, étant respectivement disposé en chacun des n x m points de croisement ou à proximité de chacun de ces n x m points de croisement, qui résultent des n barres omnibus (3) et des m transformateurs à gradins (2), c'est-à-dire des intersections (4) des premières lignes (1a, 1b, 1c) avec les autres lignes (11...16).
